# EUROPEAN PATENT APPLICATION

(11) **EP 4 651 436 A1**
(43) Date of publication of application: **19.11.2025**
(21) Application number: 24305743.7
(22) Date of filing: 14.05.2024
(51) Int. Cl.: H04L 9/40, H04L 9/32

(54) **SYSTEM AND METHOD TO MITIGATE STORAGE OVERLOAD DURING WEB AUTHENTICATION**

(71) Applicant: THALES DIS FRANCE SAS, 92190 Meudon (FR)
(72) Inventor: KARTIKA, Daya Sakti Nawa, 120710 SINGAPORE (SG); ZHENG, Lihao, 550407 SINGAPORE (SG); KOKASIH, Tyas, 640608 SINGAPORE (SG); POTONNIEE, Olivier, 13001 MARSEILLE (FR)
(74) Representative: Grevin, Emmanuel

(57) **Abstract**

Provided is a system and method to mitigate the risk of flooding and overburdening of resources associated with passwordless authentication login requests, and more specifically, prevent storage overload from excessive usernameless login requests. In a first section, emphasis is on the Challenge and its contextual data, which are no longer stored in Data Storage during the Start Login phase. In a second section, the Challenge state is recovered from the client response in the Verify Credential phase. In a third section, the Challenge will be checked whether it has been consumed to mitigate anti-replay attacks. In a fourth section, steps are taken to guard against a flood of legitimate authentications, more specifically, to protect against an unusual number of good authentication requests from a single user. Other embodiments disclosed.

## Description

### TECHNICAL FIELD

The present invention relates generally to computer authentication protocols and software security, and more particularly, to web authorization using challenge exchanges to mitigate storage overload from excessive login requests.

### BACKGROUND

Passwordless authentication is a means to verify a user's identity, without using a password. It works by replacing passwords with other authentication factors that are intrinsically safer. In contrast, password-based authentication, occurs when a user-provided password is matched against what is stored in a database. Passwordless authentication uses more secure alternatives like possession factors, such as one-time passwords (OTP), personal identification numbers (PIN), registered smartphones, or biometrics, such as fingerprint and retina scans.

In a passwordless authentication login, a user initiates a login request without entry of a password, and then a relying party server forwards the login request to an authentication service. The service generates a Challenge, and the user authenticates with an Authenticator, such as a mobile app on the user's device, against the Challenge to prove their identify to the authentication service. Passwordless authentication relies on the same principles as digital certificates using a cryptographic key pair of a private and a public key. The private key is stored on the user's local device and can only be accessed using an authentication factor, e.g., a fingerprint, PIN, or OTP. The public key is provided to the system on which the user wishes to have a secure account. Registration is the process by which the user enrolls with an authentication service and gains a credential such as a username or digital certificate for subsequent authentication.

Passwordless authentication is still however subject to various types of cybersecurity attacks. A replay attack is a network attack where an attacker intercepts a network communication between two parties to delay, redirect, or repeat it. Then, the cybercriminal assumes the identity of a legitimate party and retransmits the traffic to replicate or manipulate the original action. A Denial of Service (DoS) is another type of cyber attack where the perpetrator makes a device or system asset inaccessible to legitimate users by disrupting its functionality or administration. A DoS is commonly performed by flooding the targeted device or asset, for example one hosting a website, with demands to over-burden resources thereby preventing legitimate requests from being processed.

Problems with the WebAuthn/FIDO2 Username-less authentication protocol attacks relate to cryptographic challenges and their implementation details. As a cryptographic protocol, Web Authentication is dependent upon randomized challenges to avoid replay attacks. In order to prevent replay attacks, the challenges must contain enough entropy to make guessing them infeasible. Furthermore, Public Key Credential Creation challenge options and Public Key Credential Request challenge options must be randomly generated by Relying Parties in an environment they trust, for example, on the server-side, and the returned challenge value in the client's response must match what was generated. This should be performed in a manner that does not rely upon a client's behavior. For instance, the Relying Party should store the challenge temporarily until the operation is complete. Challenges should also be valid only for a certain duration and default to an acceptable WebAuthn ceremony timeout periods. Tolerating a mismatch will compromise the security of the Web Authentication protocol.

FIDO2 is the umbrella term for a passwordless authentication open standard developed by the Fast Identity Online (FIDO) Alliance, an industry consortium comprised of technology firms and other service providers. FIDO2 consists of two core components. The first is the web authentication applications programming interface, referred to as WebAuthn API, which companies integrate into their browsers, for example, Chrome, Edge, Mozilla, and WebKit. Second, a Client to Authenticator (CTAP) protocol provides a way for FlDO2-capable devices to interface for external authenticators via NFC, USB, or Bluetooth. The Client 101 retrieves assertion options from the FIDO2 Server, utilizes a FIDO2Authenticator to generate a response to the Challenge, and sends this response back to the Relying Party's FIDO2 Server.

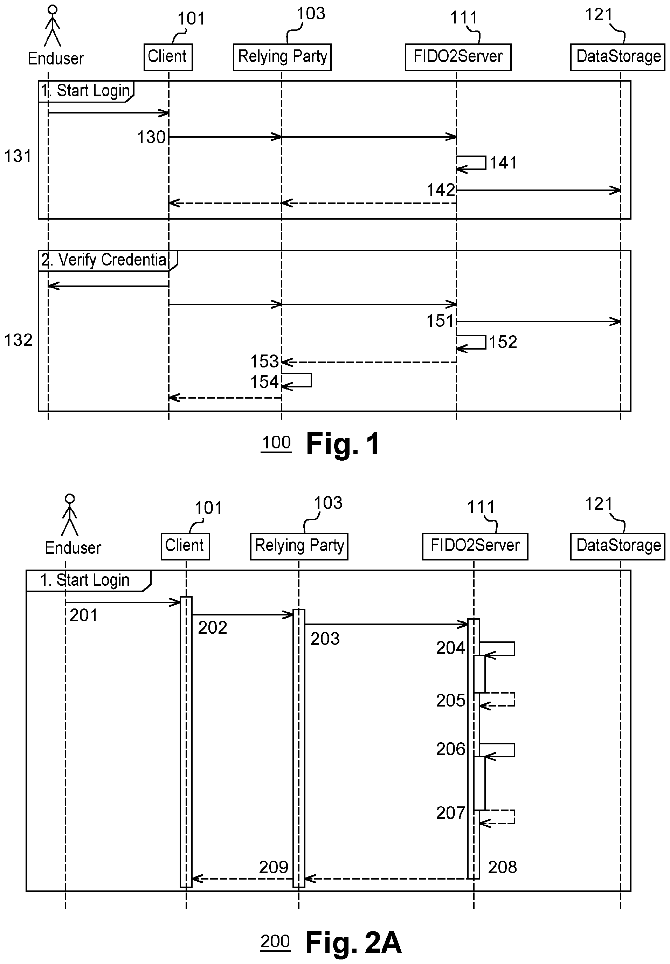

**FIG. 1** illustrates a sequence diagram for Web authentication, preferably using a Fast Identify Online version 2 (FIDO2) protocol implementation, for username-less authentication, where no username is required. Here, the End User handles a local device, or Client 101 referred to also as a FIDO2 Client, such as a mobile phone, computer or other electronic device to authenticate with a FIDO2 Server 111 by way of a Relying Party 103. The FIDO server stores and retrieves data, such as credentials, from the Data Storage 121. The Client 101 retrieves assertion options from the FIDO2 Server, utilizes a FIDO2 Authenticator to generate a response to the Challenge, and sends this response back to the Relying Party's FIDO2 Server.

In a first phase, informally referred to here as the Start Login phase 131, the client 101 will submit a start login request at step 130 to a FIDO2 Server 111 to receive a Challenge, without supplying a username, through a get assertion options request, which is a function of the WebAuthn /FIDO2 specification for cryptographic challenges. As per the function, at step 141, the Challenge is a sequence of randomly generated bytes that should be stored temporarily, at step 142, along with its contextual data associated with this Challenge.

In a second phase, informally referred to here as a Verify Credential phase 132, the client 101 will send back, to the FIDO2 server 111, by way of a Relying Party 103, the Challenge and the signature generated by the FIDO2 authenticator residing on the End User side of the client 101 as an authenticator response. Upon the FIDO2-Server 111 receiving the signature, it will fetch the Challenge and its contextual data from the Data Storage 121 at step 151, and then delete them both from Data Storage 121. This deletion step is to help prevent a replay attack. The contextual data will also be used to further verify the authentication responses at step 152. Once the verification of the signature is completed and validated, the user ID will be returned to the Relying Party 103 at step 153 who will then set and mark this user ID as being logged in or authenticated in its web session at step 154.

Under this Webauthn/FIDO2 Username-less authentication protocol implementation, one can however imagine a malicious actor that floods the FIDO2-Server 111 with numerous "Start Login" requests and then consequently abandons the overall authentication flow in the Challenge portion of the Start Login phase 131. Here, the malicious actor is submitting multiple login requests to intentionally not follow through with the Challenge that the FIDO2-Server **111** otherwise expects; thereby flooding the server with requests. Thus, the FIDO2-Server will allocate resources to handle the expected requests ahead that are never received. The Data Storage will then fill up with abandoned challenges, which could risk exhausting the Data Storage and prevent fulfilling other client requests, thereby rendering it nonoperational for some clients.

Although putting in a prevention appliance such as a firewall in front of the FIDO2-Server to perform network packet analysis in order to check an originating IP address source and blocks requests if this address has been shown to be flooding with request could be seen as a possible solution, there could be false positives that affect the user experience. For example, this could occur if legitimate users are behind a Network Address Translation (NAT) gateway and the NAT gateway's IP is the blocked because there are other IP addresses behind that NAT that are suspiciously launching the flooding attacks. This type of Denial of Service (DoS) attack involves a single machine used to either target a software vulnerability or flood a targeted resource with packets, requests or queries. However, the server may be subject to a distributed (DDOS) attack where multiple connected devices under control of botnets have coordinated their activity for a planned attack. According, this Webauthn/FIDO2 Username-less authentication protocol approach is vulnerable to denial-of-service attacks. Furthermore, protection by rate limiting per user is not a feasible option at this phase, because it is not applicable to the start log in phase.

Other approaches have been considered as well. U.S. Patent 8,112,629 B2 entitled stateless challenge response protocol is directed to a generic exchange where neither party needs to preserve data about the other while it is the other's turn to proceed with the protocol. The statelessness helps protect the participants from denial-of-service attacks where an attacker starts many protocol interactions, but does not proceed with them, in an attempt to exhaust the attacked system's resources. It employs technique whereby a server sends request plus a tamper evident challenge using UDP but does not consider implementation aspects for FIDO2 authentication on top of HTTPS.

Accordingly, a need remains to mitigate the risk of flooding and overburdening of resources associated with passwordless authentication login requests and credential verification as related to cryptographic challenges when using the Webauthn/FIDO2 Username-less authentication protocol.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

Provided is a system and method to mitigate the risk of flooding and overburdening of resources associated with passwordless authentication login requests, and more specifically, to prevent storage overload from excessive FIDO2 usernameless login requests. Four inventive sections are layered into the WebAuthn/FIDO2 protocol across the Start Login phase and the Verify Credential phase. Advantages of this revised protocol message format and exchange result in reduced storage requirements. No temporary storage is needed to support "Start Login" phase. It also provides for simpler key management because only the FIDO2-Server needs to know the secret key for encrypting and signing the Challenge JWE Token. Moreover, it improves the robustness of FIDO2 authentication flow, for example, with use of Passkey and Autofill. And it can be applied to FIDO2 registration and username-full authentication since the patterns are similar, and could be applicable to other Challenge Response Auth protocol, for example, Out of Band (OOB) authentication and One Time Passcodes (OTP).

The first section mitigates the risk of storage exhaustion during the Start Login phase. In this section, the emphasis is on the Challenge and its contextual data, which are no longer stored in Data Storage during the "Start Login". Here instead, the FIDO2-Server will issue a Challenge JWE Token that encapsulates the Challenge and its contextual data. This JWE will be given an expiry period, and the Challenge can be part of a claim, including, but not limited to a JTI claim as one option.

The second section describes how to recover the Challenge data in the Verify Credential phase, and more specifically, how the Challenge state is recovered from the client response. In this section, which is the earlier part of Verify Credential phase, where the FIDO2-Server receives the authenticator response and the Challenge JWE Token that was received earlier. The Challenge JWE Token will be encapsulated in the client Extension Results. FIDO2-Server can decrypt the Challenge JWE Token to recover the Challenge ant its contextual data. The FIDO2-Server will also check that the Challenge in the JWE token matches with the Challenge from the FIDO2 client data. FIDO2-Server will also do basic check of a JWT, such as the expiry time of the JWT.

The third section describes the Challenge anti-replay during the Verify Credential phase, and more specifically, steps for recovering the state of the Challenge. A Challenge will be checked whether it has been consumed by checking the existence of the Challenge in the FIDO2-Server Data Store. This is the step that prevents good challenge responses from being replayed, and which stores challenge bytes in the Data Storage. After the Challenge is not found, or determined to not be found, in the Data Storage, the FIDO2-Server performs the usual checks such as whether the authenticator credential identifier is registered, the signature is correct, and if the client Data JSON has the correct client origin.

Section four includes the final steps necessary to guard against a flood of legitimate authentications, more specifically, to protect against an unusual number of good authentication-challenge responses from a single user . The FIDO2-Server queries the number of successful authentications for this user for a past time interval window, for example, 15 seconds. The time window is relevant since it would be very unusual otherwise for a single user to be able to perform many FIDO2 assertions within a very short time span. This is because it takes time for a human to give a confirmation gesture to the FIDO2 authenticator or it takes time for a human to authenticate with the FIDO2 authenticator. In another relevant step, if the user does not breach the rate limit set by the time window, the FIDO2 server marks the Challenge as being consumed by inserting to the Data Storage with a Time To Live (TTL) matching the Challenge JWE Token expiry time. Here, it does not need to keep the used Challenge forever because a challenge has an expiry, and this is also a good measure to conserve Data Storage space.

Also in section four, the user that successfully authenticates is logged and given a Time To Live (TTL) for this log entry with as much time as the time interval window of the authentication rate limit. Similarly, for this step, the FIDO2-Server does not need to keep the log entry forever because successful authentication events that happen before the rate limit window period do not need to be counted anymore, and therefore be removed from the Data Storage to conserve Data Storage space. In a following step, the FIDO2-Server returns the userID that successfully authenticated with the authenticator, and marks the Challenge as consumed. Here user identifier logs for authentication are created only after all validations are successful, which is also done to prevent data storage consumption from going out of control due to invalid inputs/responses from clients. Here, "user identifier log" alone is a single type of log record for a particular user identifier. There exists some mechanism that is responsible for automatically removing expired data from the Data Storage.

Advantageously, three security measures result from the inventive sections. The first one is the primary security feature, the other two add more security. Here, using a JWE Token as a container for the Challenge and its contextual data, instead of persisting them on the FIDO2 server, with the addition of an expiry time, provides the primary security feature. The second feature for anti-replay occurs by storing the consumed challenges temporarily. The third feature occurs by rate limiting the number of authentications per user.

In some embodiments, a method for preventing storage overload from excessive FIDO2 username-less login requests to mitigate risk of storage exhaustion during a Start Login phase comprises receiving a username-less login request from a client communicatively coupled to a FIDO2-Server via a network; generating a Challenge JWE Token to permit the client to perform the username-less login request; encrypting and signing the Challenge JWE Token with a secret key only known by the FIDO2 Server **111** to issue said Challenge JWE Token; and, transmitting the Challenge JWE Token as part of WebAuthn client extension input to the client; whereby the Challenge and its contextual data are not stored in a Data Storage **121** during the Start Login phase.

In some embodiments the step of generating the Challenge JWE Token includes embedding a Challenge of random bytes as a JWT claim within the Challenge JWE Token so as to bind the Challenge with the Challenge JWE Token.

In some embodiments the step of generating the Challenge JWE Token further includes embedding Challenge contextual data as part of the Challenge JWE Token.

In some embodiments the step of generating the Challenge JWE Token further includes giving the Challenge JWE Token an expiry time period such that the Challenge will be associated to a validity period within the Challenge JWE Token.

In some embodiments, to recover the Challenge during a Verify Credential phase, the method includes receiving an authenticator response and the Challenge JWE Token that is encapsulated in WebAuthn client extension results of the authenticator response. The client extension referred to here is the WebAuthn client extension. TheChallenge JWE Token is an additional data compared to standard WebAuthn/FIDO2 responses. The method includes decrypting the Challenge JWE Token to recover the Challenge and the contextual data thereby producing a decrypted Challenge; checking that the decrypted Challenge and the contextual data matches the Challenge from client data of the authenticator response. Storing the Challenge in the JTI claim is one example, but it could be stored in another claim of the JWE. The method includes generating a signature verification result structure based on outcome of said verification; and advantageously marking the Challenge as consumed by storing it in the Challenge Data Store.

In some embodiments, the method includes advantageously checking whether the Challenge received has been consumed by checking the existence of the Challenge in a Data Store of the FIDO2-Serverto advantageously establish challenge anti-replay during the Verify Credential phase

In some embodiments, to advantageously guard against a flood of good authentications, the method includes querying an authentication count of successful authentications for a past time interval of an end user of the client submitting the usernameless login request; determining whether the authentication count for a relative time period associates with a reasonable authentication event by the user; and determining, if, the user does not breach a rate limit for the reasonable authentication event, then, inserting to the Data Storage a time to live (TTL) that matches the Challenge JWE Token expiry time.

In some embodiments, the method includes, for example storing only the Challenge that has been responded to correctly, has not breached the authentication rate limit, has not yet expired, and has not yet been stored before, and if so, checking all these conditions, and if true, stores the Challenge, otherwise, and returning a negative authentication response back, and ensuring that no data associated with the Challenge is stored in the the Data Storage.

In some embodiments, to mitigate risk of storage exhaustion during a Start Login phase, the method includes embedding inputs for the issuing Challenge JWE Token and including a Challenge together as a claim inside the encrypted JWE body.

In all the embodiments above may for example by practiced by a server for preventing storage overload from excessive FIDO2 username-less login requests, such as a FIDO2-Server, comprising one or more processors, memory, and the plurality of sensors operatively coupled to the one or more processors, wherein the memory includes computer instructions which when executed by the one or more processors causes the one or more processors to perform any of the operations of the method steps above, whether, sequentially or non-sequentially in time. In some embodiments the FIDO2-Server is communicatively coupled to a Data Storage, which may include its own processors to perform its operations of method steps.

In some embodiments, to prevent storage overload from excessive FIDO2 username-less login requests during a Start Login phase, the FIDO2-Server receives a username-less login request from a client communicatively coupled to the FIDO2-Server via a network; generates a Challenge JWE Token to permit the client to perform the usernameless login request; encrypts and signs the Challenge JWE Token with a secret key to issue said Challenge JWE Token; and transmits the Challenge JWE Token as part of a client extension input to the client, whereby the Challenge and the contextual data are not stored in a Data Storage **121** during the Start Login phase. Here, the FIDO2-Server may encrypt and sign the Challenge JWE Token with a secret key to issue said Challenge JWE Token. The Challenge JWE Token is encrypted and signed by a secret key only known by the FIDO2-Server.

In some embodiments, the FIDO2-Server when generating the Challenge JWE Token embeds a Challenge of random bytes as a JWT claim within the Challenge JWE Token so as to bind the Challenge with the Challenge JWE Token. In some embodiments it also embeds Challenge contextual data as part of the Challenge JWE Token. In some embodiments it additionally gives the Challenge JWE Token an expiry time period, such that the Challenge will be associated to a validity period within the Challenge JWE Token.

In some embodiments, to recover the Challenge during a Verify Credential phase, the FIDO2-Server receives an authenticator response and the Challenge JWE Token that is encapsulated in a client extension results of the authenticator response; decrypts the Challenge JWE Token to recover the Challenge and the contextual data thereby producing a decrypted Challenge; checks that the decrypted Challenge and the contextual data matches the Challenge from client data of the authenticator response; generates a signature result construction based on outcome of said verification; and marks the storage as consumed by storing it in the Data Store **121.**

In some embodiments, to advantageously prevent storage overload and to challenge anti-replay during the Verify Credential phase, it checks whether the Challenge received has been consumed by checking the existence of the Challenge in a Data Store **121** of the FIDO2-Server.

In some embodiments, to advantageously prevent storage overload and guard against a flood of good authentications, it queries an authentication count of successful authentications for a past time interval of an end user of the client submitting the usernameless login request; determines whether the authentication count for a relative time period associates with a valid authentication event by the user; and, determines, if, the user does not breach a rate limit for the valid authentication event, then, inserts to the Data Storage a time to live (TTL) that matches the Challenge JWE Token expiry time.

In some embodiments, it advantageously stores only the Challenge that has been responded to correctly, has not breached the authentication rate limit, has not yet expired, and has not yet been stored before, and if so, checks all these conditions, and if true, stores the Challenge, otherwise, returns a negative authentication response back, and ensures that no data associated with the Challenge is stored in the Data Storage **121.**

Advantageously, as one example implementation, the FIDO2 Server issues the Challenge JWE Token by encapsulating the Challenge and its contextual data to mitigate a risk of storage exhaustion during the Start Login phase, wherein the Challenge and its contextual data are no longer stored in Data Storage during the Start Login phase. The step of checking whether the Challenge received has been consumed can advantageously prevents good-challenge responses from being replayed.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1** is a sequence diagram for a web authentication username-less authentication protocol in state of the current art;
**FIG. 2A** is a sequence diagram for mitigating risks from floods of abandoned requests associated with a Start Login phase for web authentication username-less authentication protocol in accordance with some examples and embodiments;
**FIG. 2B** is a sequence diagram for recovering the challenge data in a Verify Credential phase for web authentication username-less authentication protocol in accordance with some examples and embodiments;
**FIG. 2C** is a sequence diagram for challenge anti-replay during the Verify Credential phase for web authentication username-less authentication protocol in accordance with some examples and embodiments;
**FIG. 2D** is a sequence diagram for guarding against a flood of valid authentications during the Verify Credential phase for web authentication username-less authentication protocol in accordance with some examples and embodiments;
**FIG. 3** illustrates an example of a computing system suitable for implementing a web authentication username-less authentication protocol accordance with some embodiments;
**FIG. 4** illustrates an example of a storage medium suitable for implementing a web authentication username-less authentication protocol accordance with some embodiments; and
**FIG. 5** illustrates an example of a computing platform suitable for implementing a web authentication username-less authentication protocol accordance with some embodiments;.

Specific embodiments in this invention have been shown by way of example in the foregoing drawings and are hereinafter described in detail. The figures and written description are not intended to limit the scope of the inventive concepts in any manner.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Briefly, certain terms are defined as follows.

JWT - JSON Web Token is a proposed Internet standard for creating data with optional signature and/or optional encryption whose payload holds JSON that asserts some number of claims. It is s a compact, URL-safe means of representing claims to be transferred between two parties and is used to securely transmit information between parties in a JSON format. JWTs can be used to authorize access to resources and services.

JWE - JSON Web Encryption is an IETF standard providing a standardized syntax for the exchange of encrypted data, based on JSON and Base64.

CHALLENGE - a random bytes that contains enough entropy to make guessing them infeasible as defined by the WebAuthn specification.

CHALLENGE JWE TOKEN - a JWE Token that is bound to the Challenge, valid until a predetermined time, and include other contextual data for the Challenge. This is a unique inventive term in a preferred embodiment.

JTI - is a unique string identifier in an enroll request field of a JWT.

ATTESTATION - How FIDO Authenticators make claims to a Relying Party that the keys they generate, and/or certain measurements they report, originate from genuine devices with certified characteristics.

FIDO2 AUTHENTICATOR -A cryptographic entity, existing in hardware or software, responsible for user verification, and maintaining the cryptographic material required for the Relying Party authentication.

FIDO2 CLIENT - This is a WebAuthn Client according to W3C definition, and also referred to herein as simply a Client. A WebAuthn Client is an intermediary entity typically implemented in the user agent (in whole, or in part). Conceptually, it underlies the Web Authentication API and embodies certain W3C implementations, responsible for both marshalling the inputs for the underlying authenticator operations, and for returning the results of the latter operations to the Web Authentication API's callers.

FIDO2 SERVER - A Server software typically deployed in the relying party's infrastructure that meets FIDO2 protocol server requirements.

RELYING PARTY -A web site or other entity that uses a FIDO2 protocol to directly authenticate users and can performs peer-entity authentication.

Web Authentication (WebAuthn) is a core component of FIDO Alliance's FIDO2 set of specifications that is a web-based API that allows websites to update their login pages to add FIDO-based authentication on supported browsers and platforms. FIDO2 enables users to leverage common devices to easily authenticate to online services in both mobile and desktop environments. When a user registers with a FIDO2-supported online service, their client device registered to perform the authentication generates a key pair that works only for that web app or website. The public key is shared with the service, but the private key remains securely on the user's device; it is never transmitted in encrypted from. In the context of WebAuthn, the private key is stored in the FIDO2 Authenticator, which enables the user to authenticate to online services on both mobile and desktop environments, using unique cryptographic login credentials for every site.

**FIG. 2A** is a sequence diagram for mitigating risks from floods of abandoned requests associated with the Start Login phase for Webauthn/FIDO2 Username-less authentication in accordance with some examples and embodiments associated with section three of the revised web authentication protocol disclosed herein. At step **201,** the End User starts a log in process, for example, by clicking "Login". At step **202,** the Client 101 initiates the login. Within this section, the emphasis is on the Challenge and its contextual data, which are no longer stored in Data Storage **121** during the "Start Login", thereby reducing memory overhead and management.

At step **203,** the Relying Party 103 sets options for parameters and value pairs: user verification, for example, with a value of "preferred"; resident key, for example, with a value of "required"; and other contextual data. At step **204,** the FIDO2 Server **111** creates and generates a Challenge with random bytes. It generates random values between 16-64 bytes as per the WebAuthnspecification and FIDO Alliance Conformance Test API specification. Briefly, one difference with respect to US 8,112,629 is that it makes use of time, sequential counter, and a MAC is to counter replay attacks, whereas, here, the Challenge JWE Token uses a random byte challenge as per the WebAuthn spec, without the necessity of using a sequential counter.

Briefly, JSON Web Encryption enables encrypting a token so that only the intended recipient can read it. This standardizes the way to represent the encoded data in a JSON data structure. Representation of the encrypted payload may be by JWE compact serialization or JWE JSON serialization. Here one may ask the question as to why not modify the Challenge that is returned back to the client by using the JWE Token step, so as to contain just the Challenge JWE Token. One reason is that for FIDO2-Server to pass the FIDO Conformance test, challenge bytes must not exceed 64 bytes. Therefore, it will be difficult to pack challenge contextual data information around the Challenge within the 64 bytes limit.

As seen at step **205,** instead of the existing protocol approach, the FIDO2-Server 111 issues the Challenge JWE Token that encapsulates the Challenge and its contextual data. In step **206,** it creates the Challenge JWE Token and issues it with options for parameters and value pairs; for example: the Challenge with an array of byte values, a user verification with value of "preferred" for example, and notably, an expiryTime, and other contextual data. Here, the JWE is given an expiry period, and the Challenge will be a claim in the encrypted body of the JWE, for example as a JTI Claim. Briefly, the "JTI" (JWT ID) claim in the JWT specification provides a unique identifier for the JWT. The identifier value must be assigned in a manner that ensures that there is a negligible probability that the same value will be accidentally assigned to a different data object; if the application uses multiple issuers, collisions must be prevented among values produced by different issuers as well.

The FIDO2 Server **111** embeds the inputs for the issuing Challenge JWE Token and includes the Challenge as a claim in the encrypted body of the JWE Token, so as to bind the Challenge with the Challenge JWE Token. The Challenge JWE Token is encrypted and signed, for example, using AES-256-GCM algorithm for confidentiality and integrity. The Challenge JWE Token is encrypted and signed by a secret key only known by the FIDO2-Server. The FIDO2 Server signs and encrypt the JWT with a key specific to the relying party, and keeps this key secure and private. That is, the Challenge JWE Token is encrypted and signed by a secret key only known by the FIDO2-Server. Another difference with respect to US 8,112,629, where a tamper-evident challenge includes data encrypted by a key shared with the client, here, only the FIDO2-Server 111 holds the secret key to issue the Challenge JWE Token. This secret key is not, and must not, be shared to anyone else, including the client.

The expiryTime period is also placed in the Challenge JWE Token. This method gives a limited lifetime for the Challenge JWE Token to match the intended lifetime of the associated Challenge.. Step **207** contains the Challenge JWE Token that was issued in Step **206.** Notably, in all steps **204-208,** the FIDO2 Server **111** does not store the Challenge and its contextual data during the "start login" anymore. In step **208,** the FIDO2 Server **111** produces an assertion options containing fields as per the WebAuthn standards, but with the addition of the "extensions" parameter that now embeds the Challenge JWE Token from step **207.** The options for generating the assertion (i.e. Assertion Options) are generated and contain fields as per the FIDO2 standards, and now embeds the Challenge JWT Token. At step **209** the Relying Party **103** passes the assertion options to the Client **101.** The first section, exemplified by steps **204-208,** effectively mitigates risks from floods of abandoned start login requests, and more specifically, minimizes the risk of storage exhaustion during the Start Login phase.

Briefly, an outside agent could inspect the FIDO2-Server **111** response received by the client side during challenge creation to evaluate whether the response contains additional data in the extension, possibly in a form of a JWE, to confirm whether the inventive method steps disclosed herein are employed, for example, for ensuring compliance or for infringement detection. Here also, the client **101** must return the Challenge JWE Token within the WebAuthn client extension results in the client responses in order to take full advantage of the inventive method.

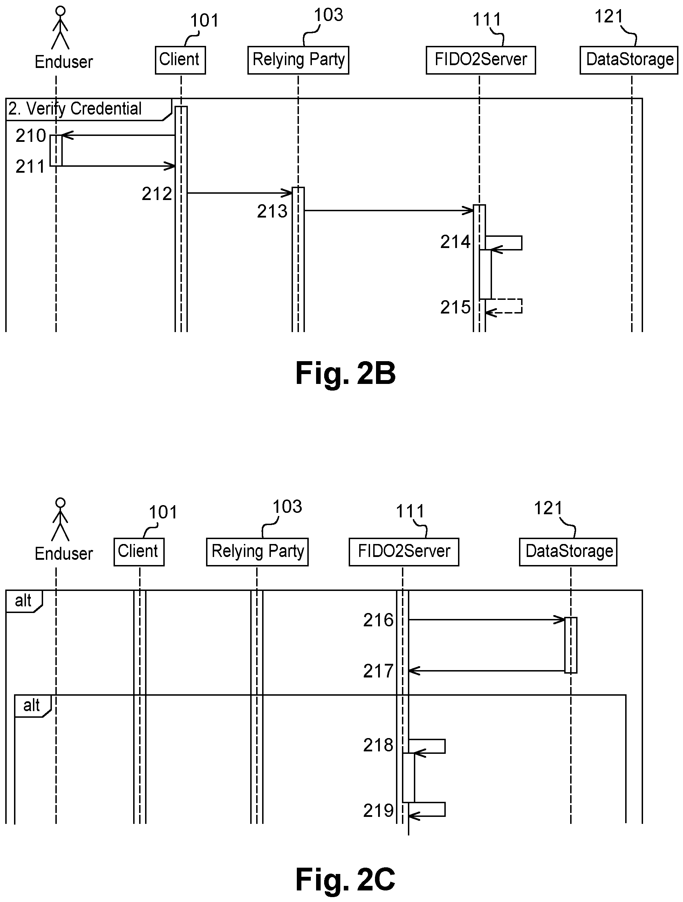

**FIG. 2B** is a sequence diagram for recovering the challenge data in a Verify Credential phase for Webauthn/FIDO2 Username-less authentication in accordance with some examples and embodiments associated with section two of the revised web authentication protocol disclosed herein. At steps **210,** the Client **101** prompts the End User to generate an Assertion using his/her FIDO2 Authenticator with the assertion options received in Step **209,** which includes the Challenge value and some additional parameters, notably the WebAuthn client extension results which contains the Challenge JWE Token. Step **211** passes the authenticator response containing the generated Assertion to the Client **101,** and then this authenticator response gets forwarded to Relying Party **103** through step **212.** At Step **212,** the same Challenge JWE Token that it received from step **209** is sent to the Relying Party 103 as part of WebAuthn client extension as well.

At step **213,** the Relying Party **103** sends a verification request containing the authenticator response and Challenge JWE Token encapsulated within the WebAuthn client Extension result to the FIDO2-Server **111.** Then, at step **214,** the FIDO2-Server **111** decrypts the Challenge JWE Token to recover the Challenge contextual data, and checks that it contains a claim, for example through the use of JTI claim, that matches with the Challenge. FIDO2-Server will also do a basic check of the JWT such as the expiry time. At step **215,** the FIDO2 Server has enough information about the Challenge to decide whether to proceed with the next step in the Verify Credential phase.

**FIG. 2C** is a sequence diagram for Challenge anti-replay during the Verify Credential phase for Webauthn/FIDO2 Username-less authentication in accordance with some examples and embodiments associated with section three of the revised web authentication protocol disclosed herein. At step **216,** the FIDO2-Server **111** checks whether a received Challenge has been consumed by checking the existence of the Challenge in the Data Store **121** of the FIDO2-Server. This is the step that prevents good-challenge responses from being replayed; namely, to be resilient to replay attacks. At step **217** the FIDO2-Server **111** receives a determination of whether the Challenge was consumed. At step **218,** the FIDO2-Server **111** verifies the authenticator response, notably that the Challenge in the decoded client data in JSON format is matching the Challenge in the claim of the encrypted body of the Challenge JWE Token. Here the FIDO2-Server performs the usual the usual validation on the authenticator response such as whether the authenticator credential identifier is registered, the signature is correct and the decoded client Data JSON has the correct client origin, and if not confirmed, not proceeding authentication. At step **219,** the FIDO2-Server **111** signature verification result structure that contains at least the user identifier owning the authenticator credential, and this user identifier is the user who have successfully passed the authenticator signature verification step.

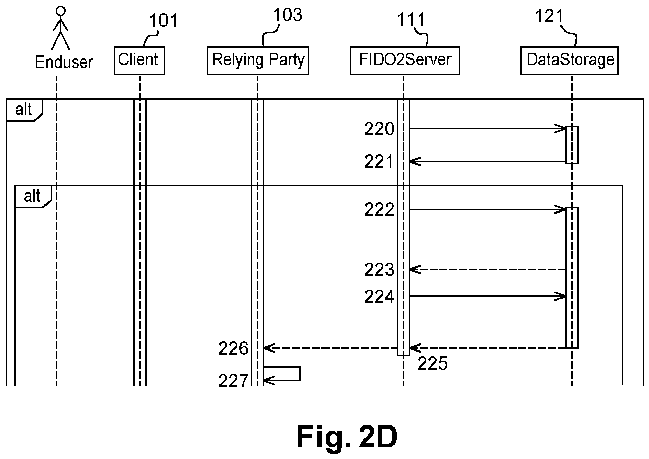

**FIG. 2D** is a sequence diagram for guarding against a flood of valid authentications during the Verify Credential phase for Webauthn/FIDO2 Username-less authentication in accordance with some examples and embodiments associated with section four of the revised web authentication protocol disclosed herein. At step **220,** the FIDO2-Server **111** queries the number of successful authentications for this user for the past XXX-time interval window, for example, within 15 seconds. It will be very unusual for a single user to be able to perform many FIDO2 assertions within a very short time span because it takes time for a person to present a confirmation gesture to the FIDO2 authenticator, or merely takes time for a person to authenticate with the FIDO2 authenticator. At step **221** the FIDO2-Server **111** receives a determination of whether the authentication count for the relative time period associates with a reasonable authentication event, for instance, the authentication count is successful or not with respect to a rate limit.

At step **222,** if the FIDO2-Server **111** determines that the user does not breach the rate limit, it marks the Challenge as being consumed by inserting to the Data Storage **121** a time to live matching the Challenge JWE Token expiry time as a measure to conserve data storage space. There exists a mechanism that is responsible for automatically removing all data whose expiry time has been reached from the Data storage **121.** Here, the FIDO2-Server **111** stores only the Challenge that has been responded to correctly, has not breached the authentication rate limit, has not yet expired, and has not yet been stored before. It checks all these conditions, and if true, will store the Challenge. Otherwise, returns a negative authentication response back, and no data associated with the Challenge is stored. In contrast, a thrown exception is an internal server mechanism. Different implementations may use another mechanism. What matters is that the FIDO server will in such case send a negative authentication response (the format of which is not standardized) back to the relying party.

At step **223,** FIDO2-Server 111 receives the status of the operation that was done in step 222, which may include also the status of whether the write operation to the Data Storage was successful.

At step **224,** it records successful authentication to the Data Storage **121** with reference to the user identifier owning the authenticator credential, current time, and the Time To Live (TTL). The Data Storage **121** records the user that successfully authenticated and places the TTL with the size of the interval of the sliding window, for example, associated with the rate limit. That is, the FIDO2-Server **111** records the user that successfully authenticate and assign a Time To Live (TTL) for this record for at least the time interval window of the authentication rate limit. Again, for this step, the FIDO2-Server **111** does not need to keep the log entry forever because successful authentication events that happen before the rate limit associated with a window period for a reasonable authentication event need not be counted anymore, and therefore can be removed from the Data Storage **121.** At step **225,** the status of authentication log is reported to the FIDO2-Server **111.**

At step **226,** the FIDO2-Server **111** returns the user ID that successfully authenticated using the Authenticator to the Relying Party 103. The Relying Party 103 then set and mark this user ID as being logged in or authenticated in its web session at step 227.

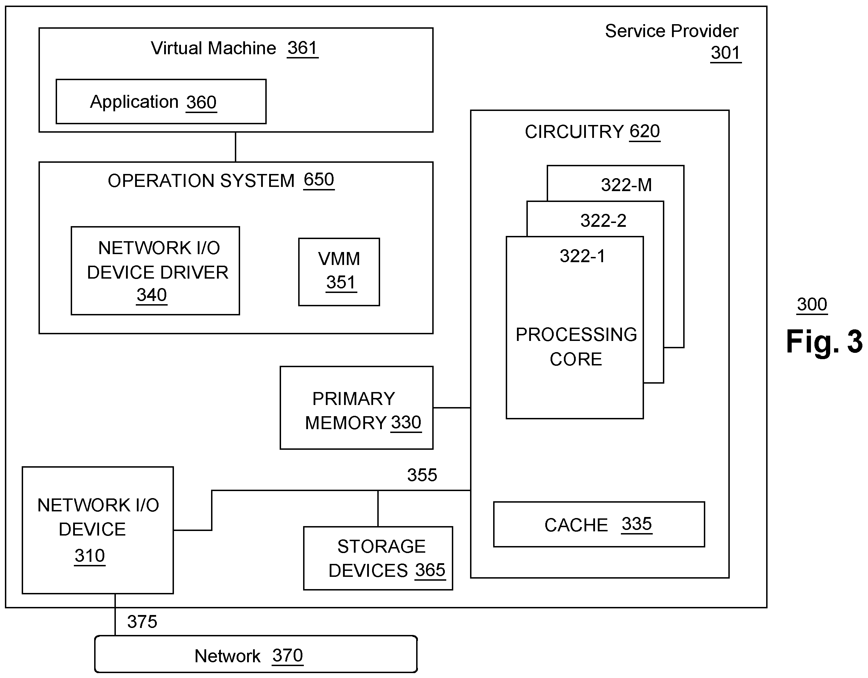

**FIG. 3** shows an exemplary server **301** (e.g., FIDO2-Server **111**) that includes circuitry **320,** primary memory **330,** operating system (OS) **350,** Network (NW) I/O device driver **340,** virtual machine manager (VMM) (also known as a hypervisor) **351,** at least one application **360** running in a virtual machine (VM) **361,** and one or more storage devices **365.** In one embodiment, OS **350** is Linux^{™}. In another embodiment, OS **350** is Windows^{®} Server. Other OSs may also be used. In an embodiment, application **360** comprises one or more of a cloud license manager service having one or more smart license automatic detach policies. Network I/O device driver **340** operates to initialize and manage I/O requests performed by network I/O device **310.** In an embodiment, packets and/or packet metadata transmitted to network I/O device **310** and/or received from network I/O device **310** are stored in one or more of primary memory **330** and/or storage devices **365.**

In some embodiments, the client **101** and Relying Party **103** may also include their own respective server **301,** and/or which may comprise one or more processors, with processing cores, and memory coupled to the one or more processors, wherein the memory includes one or more partitions and computer instructions which when executed by the one or more processors causes the one or more processors to perform said steps and operations described herein associated with the Webauthn/FIDO2 protocol, and more specifically, the four inventive sections shown and described in the sequence diagrams of **FIGS 1** and **2A-****2D.**

In some examples, as shown in **FIG. 3**, circuitry **320** may communicatively couple to network I/O device **310** via communications link **355.** In one embodiment, communications link **355** is a peripheral component interface express (PCIe) bus conforming to version 3.0 or other versions of the PCIe standard published by the PCI Special Interest Group (PCI-SIG).

In some embodiments, the storage devices **365** is a disk storage for storing nonsensitive data such as the format preserving tokens representing date date, and associated encrypted data related to primary account numbers (PANs) or personally identifiable information (PII).

In some examples, operating system **350,** network I/O device driver **340,** VM **361,** and application **360** are implemented, at least in part, via cooperation between one or more memory devices included in primary memory **330** (e.g., volatile or non-volatile memory devices), storage devices **365,** and elements of circuitry **320** such as processors with processing cores **322**-1 to **322**-m, where "m" is any positive whole integer greater than 2. In an embodiment, OS **350,** VMM **351,** network I/O device driver **340,** VM **361** and application **360** are executed by one or more processing cores **322**-1 to **322**-m**.**

In some examples, service provider **301,** includes but is not limited to a server, a server array or server farm, a web server, a network server, an Internet server, a work station, a mini-computer, a main frame computer, a supercomputer, a network appliance, a web appliance, a distributed computing system, multiprocessor systems, processor-based systems, a laptop computer, a tablet computer, a smartphone, a system-on-a-chip (SoC), or a combination thereof. In one example, service provider **301** is a disaggregated server. A disaggregated server is a server that breaks up components and resources into subsystems (e.g., network sleds). Disaggregated servers can be adapted to changing storage or compute loads as needed without replacing or disrupting an entire server for an extended period of time. A server could, for example, be broken into modular compute, I/O, power and storage modules that can be shared among other nearby servers.

Circuitry **320** having processing cores **322**-1 to **322**-m may include various commercially available processors, including without limitation Intel^{®} Atom^{®}, Celeron^{®}, Core (2) Duo^{®}, Core i: 3, 5, 7 and 9, Itanium^{®}, Pentium^{®}, Xeon^{®} or Xeon Phi^{®} processors, ARM processors, and similar processors. Circuitry **320** may include at least one cache **335** to store data. In some embodiments, data tables within the Data Store **121** are index ordered lists stored in cache for faster processing of the Webauthn/FIDO2 protocol messages (e.g. JWT, JWE, request, Challenge, etc.). The generated tables are pinned in memory, not stored on disk and encrypted with a key unique to each installation -- derived from a proprietary secret and installation specific details.

According to some examples, primary memory **330** may be composed of one or more memory devices or dies which may include various types of volatile and/or non-volatile memory. Volatile types of memory may include, but are not limited to, dynamic random-access memory (DRAM), static random-access memory (SRAM), thyristor RAM (TRAM) or zero-capacitor RAM (ZRAIVI). Non-volatile types of memory may include byte or block addressable types of non-volatile memory having a 3-dimensional (3-D) cross-point memory structure that includes chalcogenide phase change material (e.g., chalcogenide glass) hereinafter referred to as "3-D cross-point memory". Non-volatile types of memory may also include other types of byte or block addressable non-volatile memory such as, but not limited to, multi-threshold level NAND flash memory, NOR flash memory, single or multi-level phase change memory (PCM), resistive memory, nanowire memory, ferroelectric transistor random access memory (FeTRAM), magneto-resistive random-access memory (MRAM) that incorporates memristor technology, spin transfer torque MRAM (STT-MRAM), or a combination of any of the above. In another embodiment, primary memory **330** may include one or more hard disk drives within and/or accessible by service provider **301.**

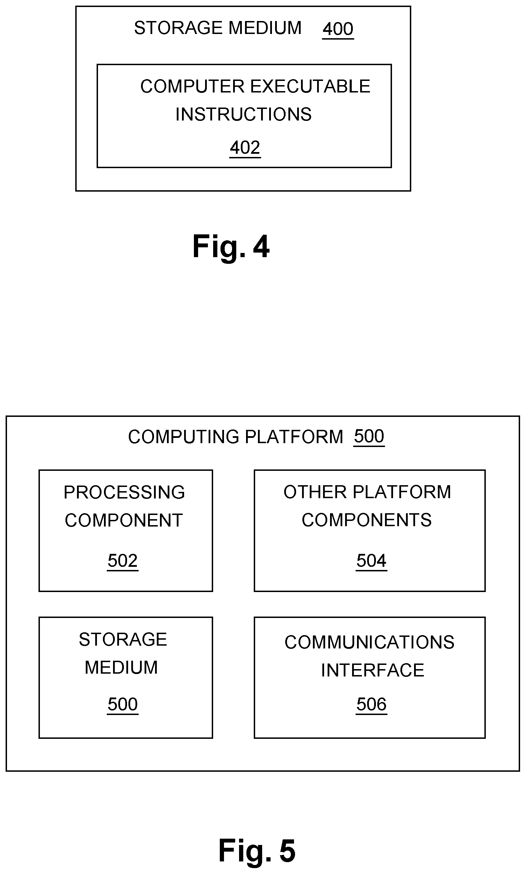

**FIG. 4** illustrates an example of a storage medium **400,** for instance, used within, or by, the Data Storage **121,** for example, to store private keys and Challenge JWE Token data. Storage medium **400** may comprise an article of manufacture. In some examples, storage medium **400** may include any non-transitory computer readable medium or machine readable medium, such as an optical, magnetic or semiconductor storage. Storage medium **400** may store various types of computer executable instructions, such as instructions **402** to implement method steps and logic flows described in the above figures. Examples of a computer readable or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

In accordance with various embodiments of the present disclosure, the methods described herein are intended for operation as software programs running on a computer processor or integrated on-chip code within static memory. Furthermore, software implementations can include, but not limited to, distributed processing or component/object distributed processing, parallel processing, or virtual machine processing can also be constructed to implement the methods described herein.

**FIG. 5** illustrates an example computing platform **500.** Each of the devices described above (e.g. Client **101,** Relying Party **103,** FIDO2-Server **111,** and Data Storage **121**) can include their own computing platform **500** for handling and processing the Webauthn/FIDO2 protocol message exchanges described and shown in **FIGS 1** and **2A****-2D.** In some examples, computing platform **500** may include a processing component **502,** other platform components **504** and/or a communications interface **506.** According to some examples, processing component **502** may execute processing operations or logic for instructions stored on storage medium **400.** Processing component **502** may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

In some examples, other platform components **504** may include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), types of non-volatile memory such as 3-D cross-point memory that may be byte or block addressable. Non-volatile types of memory may also include other types of byte or block addressable non-volatile memory such as, but not limited to, multi-threshold level NAND flash memory, NOR flash memory, single or multi-level PCM, resistive memory, nanowire memory, FeTRAM, MRAM that incorporates memristor technology, STT-MRAM, or a combination of any of the above. Other types of computer readable and machine-readable storage media may also include magnetic or optical cards, an array of devices such as Redundant Array of Independent Disks (RAID) drives, solid state memory devices (e.g., USB memory), solid state drives (SSD) and any other type of storage media suitable for storing information.

In some examples, communications interface **506** may include logic and/or features to support a communication interface. For these examples, communications interface **506** may include one or more communication interfaces that operate according to various communication protocols or standards to communicate over direct or network communication links or channels. Direct communications may occur via use of communication protocols or standards described in one or more industry standards (including progenies and variants) such as those associated with the peripheral component interconnect express (PCIe) specification. Network communications may occur via use of communication protocols or standards such those described in one or more Ethernet standards promulgated by the Institute of Electrical and Electronics Engineers (IEEE). For example, one such Ethernet standard may include IEEE 802.3. Network communication may also occur according to one or more OpenFlow specifications such as the OpenFlow Switch Specification.

The components and features of computing platform **500,** including logic represented by the instructions stored on storage medium **400** may be implemented using any combination of discrete circuitry, ASICs, logic gates and/or single chip architectures. Further, the features of computing platform **500** may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary computing platform **500** shown in the block diagram of **FIG. 5** may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in embodiments.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASIC, programmable logic devices (PLD), digital signal processors (DSP), FPGA, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

Some examples may include an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Included herein are logic flows or schemes representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow or scheme may be implemented in software, firmware, and/or hardware. In software and firmware embodiments, a logic flow or scheme may be implemented by computer executable instructions stored on at least one non-transitory computer readable medium or machine readable medium, such as an optical, magnetic or semiconductor storage. The embodiments are not limited in this context.

Some examples are described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

## Claims

1. A method for preventing storage overload from excessive FIDO2 username-less login requests, the method comprising steps of:
to mitigate risk of storage exhaustion during a Start Login phase:
receiving a username-less login request from a client communicatively coupled to a FIDO2-Server **111** via a network;
generating a Challenge JWE Token to permit the client to perform the username-less login request;
encrypting and signing the Challenge JWE Token with a secret key only known by the FIDO2 Server **111** to issue said Challenge JWE Token; and
transmitting the Challenge JWE Token as part of WebAuthn client extension input to the client; whereby the Challenge and its contextual data are not stored in a Data Storage **121** during the Start Login phase.

2. The method according to claim 1, where the step of generating a Challenge JWE Token includes embedding a Challenge of random bytes as a JWT claim within the Challenge JWE Token so as to bind the Challenge with the Challenge JWE Token.

3. The method according to claim 2, further comprising embedding Challenge contextual data as part of the Challenge JWE Token.

4. The method according to claim 3, further comprising giving the Challenge JWE Token an expiry time period such that the Challenge will be associated to a validity period within the Challenge JWE Token.

5. The method of claim 1, wherein to recover the Challenge during a Verify Credential phase, the method includes steps for:
receiving an authenticator response and the Challenge JWE Token that is encapsulated in WebAuthn client extension results of the authenticator response;
decrypting the Challenge JWE Token to recover the Challenge and its contextual data thereby producing a decrypted Challenge;
checking that the Challenge JWE Token has been signed by a correct FIDO2 Server **111** key;
checking that the decrypted Challenge and its contextual data matches the Challenge from client data of the authenticator response;
checking the expiry time of the Challenge JWE Token; and
generating a verification signature result structure based on the outcome of said verification.

6. The method of claim 5 for preventing storage overload and challenge replay attack during the Verify Credential phase, comprising:
checking whether the received Challenge has been consumed by checking the existence of the Challenge in the Data Store **121** of the FIDO2-Server;
marking the Challenge as consumed by temporarily storing it with a TTL in the Data Store **121,** provided all validity checks have been successfully completed.

7. The method according to any of the preceding claims for preventing storage overload and guarding against a flood of good authentications, comprising:
querying the count of successful authentications within a rate limit interval window of the end user of the client submitting the username-less login request;
determining whether the successful authentication count for a relative time period that is associated with a valid authentication event by the user; and,
determining, if, the user does not breach a rate limit for the reasonable authentication event, then, inserting to the Data Storage a time to live (TTL) that matches the Challenge JWE Token expiry time.

8. The method according to any of the preceding claims, further comprising
storing in the Data Store **121** only the Challenge that has been correctly responded to, has not breached the authentication rate limit, has not yet expired, and has not yet been stored before, and if so,
checking all these conditions, and if true, stores the Challenge, otherwise,
returning a negative authentication response back, and ensuring that no data associated with the Challenge is stored in the Data Storage **121.**

9. A FIDO2-Server **111** for preventing storage overload from excessive FIDO2 usernameless login requests, the server comprising :
one or more processors, memory, and the plurality of sensors operatively coupled to the one or more processors, wherein the memory includes computer instructions which when executed by the one or more processors causes the one or more processors to perform the operations of:
to mitigate risk of storage exhaustion during a Start Login phase,
receiving a username-less login request from a client communicatively coupled to the FIDO2-Server via a network;
generating a Challenge JWE Token to permit the client to perform the username-less login request;
encrypting and signing the Challenge JWE Token with a secret key to issue said Challenge JWE Token; and
transmitting the Challenge JWE Token as part of a client extension input to the client;
whereby the Challenge and the contextual data are not stored in a Data Storage **121** during the Start Login phase.

10. The FIDO2-Server of claim 9, wherein for said generating the Challenge JWE Token, it embeds a Challenge of random bytes as a JWT claim within the Challenge JWE Token so as to bind the Challenge with the Challenge JWE Token.
The FIDO2-Server of claim 10, wherein for said generating the Challenge JWE Token, it embeds Challenge contextual data as part of the Challenge JWE Token.

11. The FIDO2-Server of claim 9, wherein for said generating the Challenge JWE Token, it gives the Challenge JWE Token an expiry time period such that the Challenge will be associated to a validity period within the Challenge JWE Token.

12. The FIDO2-Server of claim 9, to recover the Challenge during a Verify Credential phase, by:
receiving an authenticator response and the Challenge JWE Token that is encapsulated in a client extension results of the authenticator response;
decrypting the Challenge JWE Token to recover the Challenge and the contextual data thereby producing a decrypted Challenge;
checking that the decrypted Challenge and the contextual data matches the Challenge from client data of the authenticator response;
generating a signature result construction based on outcome of said verification; and
marking the storage as consumed by storing it in the Data Store **121.**

13. The FIDO2-Server of claim 12 for preventing storage overload and to challenge anti-replay during the Verify Credential phase, performs the operations of:
checking, by the FIDO2-Server, whether the Challenge received has been consumed by checking the existence of the Challenge in a Data Store **121** of the FIDO2-Server;

14. The FIDO2-Server according to any of the preceding claims, for preventing storage overload and guard against a flood of good authentications, performs the operations of:
querying an authentication count of successful authentications for a past time interval of an end user of the client submitting the username-less login request;
determining whether the authentication count for a relative time period associates with a valid authentication event by the user; and,
determining, if, the user does not breach a rate limit for the valid authentication event, then, inserting to the Data Storage a time to live (TTL) that matches the Challenge JWE Token expiry time.

15. The FIDO2-Server according to any of the preceding claims, performs operations for:
storing only the Challenge that has been responded to correctly, has not breached the authentication rate limit, has not yet expired, and has not yet been stored before, and if so,
checking all these conditions, and if true, stores the Challenge, otherwise,
returning a negative authentication response back, and ensuring that no data associated with the Challenge is stored in the Data Storage **121.**
